# EUROPEAN PATENT APPLICATION

(11) **EP 4 372 958 A1**
(43) Date of publication of application: **22.05.2024**
(21) Application number: 23210262.4
(22) Date of filing: 16.11.2023
(51) Int. Cl.: H02J 7/00, H02H 7/18, H02H 9/00

(54) **DEVICE, BATTERY PACK, AND ARTICLE OF PERSONAL PROTECTIVE EQUIPMENT**

(30) Priority: 18.11.2022 US 202263384334 P
(71) Applicant: 3M Innovative Properties Company, Saint Paul, MN 55133-3427 (US)
(72) Inventor: Jensen, Douglas D., St. Paul, MN 33427 (US); Poch, James F., St. Paul, MN 33427 (US)
(74) Representative: Bergen, Katja

(57) **Abstract**

A first device includes an outrush circuit including a resistor electrically disposed in series with first and second terminals of the first device and a switch electrically disposed in parallel with the resistor. The switch is controlled by an external signal received by the first device from a second device when the first device is communicably connected to the second device and the second device is electrically connected to the first and second terminals. When the first device receives the external signal, the switch is switched on after a startup time from receiving the external signal, such that electric current from a power source substantially passes through the switch. When the first device does not receive the external signal, the switch is switched off, such that electric current from the power source substantially passes through the resistor. The resistor limits electric current to the second device.

## Description

### Technical Field

The present disclosure relates generally to a device, a battery pack, and an article of personal protective equipment (PPE).

### Background

Devices, such as blowers, may operate using electrical power from a battery pack. The battery pack may include a power source (e.g., a plurality of cells electrically connected with each other) to supply the electrical power to the devices.

In some cases, the power source of the battery pack may have a low internal electrical impedance. The low internal electrical impedance may result in an increased current flow from the power source to the device when the battery pack is electrically connected to the device. Consequently, attaching such battery packs to the device may cause damage to the device.

Therefore, there is a need for devices and battery packs that can mitigate and/or prevent damage to the devices when electrically connected to each other, while still maintaining low system impedance during operation.

### Summary

In a first aspect, the present disclosure provides a first device. The first device includes a first terminal configured to be electrically connected to a second device. The first device further includes a second terminal configured to be electrically connected to the second device. The first device further includes an outrush circuit. The outrush circuit includes a resistor electrically disposed in series with the first terminal and the second terminal. The resistor is configured to be electrically connected to the first terminal or the second terminal and a power source. The outrush circuit further includes a switch electrically disposed in parallel with the resistor. The switch is configured to be controlled by an external signal received by the first device from the second device when the first device is communicably connected to the second device and the second device is electrically connected to the first terminal and the second terminal. When the first device receives the external signal, the switch is switched on after a startup time from receiving the external signal, such that the switch bypasses the resistor and replaces the resistor, and electric current from the power source substantially passes through the switch. When the first device does not receive the external signal for a predetermined holdup time, the switch is switched off, such that electric current from the power source substantially passes through the resistor. The resistor limits electric current to the second device.

In a second aspect, the present disclosure provides a battery pack. The battery pack includes a first battery terminal configured to be electrically connected to an external device. The battery pack further includes a second battery terminal configured to be electrically connected to the external device. The battery pack further includes at least one electrochemical cell electrically disposed between the first battery terminal and the second battery terminal. The battery pack further includes an outrush circuit. The outrush circuit includes a resistor electrically disposed in series with the first battery terminal and the second battery terminal. The resistor is configured to be electrically connected to the first battery terminal or the second battery terminal, and the at least one electrochemical cell. The outrush circuit further includes a switch electrically disposed in parallel with the resistor. The switch is configured to be controlled by an external signal received by the battery pack from the external device when the battery pack is communicably connected to the external device and the external device is electrically connected to the first battery terminal and the second battery terminal. When the battery pack receives the external signal, the switch is switched on after a startup time from receiving the external signal, such that the switch bypasses the resistor and replaces the resistor, and electric current from the at least one electrochemical cell substantially passes through the switch. When the external signal is no longer received by the battery pack, the switch remains switched on for a predetermined hold up time. After this predetermined holdup time, the switch is switched off resulting in the electric current from the at least one electrochemical cell substantially passing through the resistor. The resistor limits electric current to the external device.

In a third aspect, the present disclosure provides article of personal protective equipment (PPE). The article of PPE includes the external device including a first terminal and a second terminal. The first battery terminal is configured to be electrically connected to the first terminal of the external device and the second battery terminal is configured to be electrically connected to the second terminal of the external device. The article of PPE further includes the battery pack of the second aspect. The resistor limits electric power to the first and second terminals of the external device before the startup time and after a holdup time.

The details of one or more examples of the disclosure are set forth in the accompanying drawings and the description below. Other features, objects, and advantages of the disclosure will be apparent from the description and drawings, and from the claims.

### Brief Description of the Drawings

Exemplary embodiments disclosed herein may be more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labeled with the same number.
FIG. 1 is a schematic circuit diagram of a system, according to an embodiment of the present disclosure;
FIG. 2 is a schematic diagram of a system, according to another embodiment of the present disclosure; and
FIG. 3 is a schematic circuit diagram of a first device of the system of FIG. 2, according to an embodiment of the present disclosure.

### Detailed Description

In the following description, reference is made to the accompanying figures that form a part thereof and in which various embodiments are shown by way of illustration. It is to be understood that other embodiments are contemplated and may be made without departing from the scope or spirit of the present disclosure. The following detailed description, therefore, is not to be taken in a limiting sense.

In the present disclosure, the following definitions are adopted.

As recited herein, all numbers should be considered modified by the term "about." As used herein, "a," "an," "the," "at least one," and "one or more" are used interchangeably.

As used herein as a modifier to a property or attribute, the term "generally," unless otherwise specifically defined, means that the property or attribute would be readily recognizable by a person of ordinary skill but without requiring absolute precision or a perfect match (e.g., within +/- 20 % for quantifiable properties).

The term "substantially," unless otherwise specifically defined, means to a high degree of approximation (e.g., within +/- 10% for quantifiable properties) but again without requiring absolute precision or a perfect match.

The term "about," unless otherwise specifically defined, means to a high degree of approximation (e.g., within +/- 5% for quantifiable properties) but again without requiring absolute precision or a perfect match.

Terms such as same, equal, uniform, constant, strictly, and the like, are understood to be within the usual tolerances or measuring error applicable to the particular circumstance rather than requiring absolute precision or a perfect match.

As used herein, when a first material is termed as "similar" to a second material, at least 90% by weight of the first and second materials are identical and any variation between the first and second materials comprises less than about 10% by weight of each of the first and second materials.

As used herein, the terms "first" and "second" are used as identifiers. Therefore, such terms should not be construed as limiting of this disclosure. The terms "first" and "second" when used in conjunction with a feature or an element can be interchanged throughout the embodiments of this disclosure.

As used herein, "at least one of A and B" should be understood to mean "only A, only B, or both A and B."

As used herein, the term "article of PPE" refers to any article that can be worn by a user for the purpose of preventing or decreasing personal injury or health hazard to the user in or around a hazardous environment. Articles of PPE may include safety glasses, safety goggles, face shields, face masks, respirators, gloves, suits, gowns, aprons, hard hats, etc.

As used herein, the term "controller" refers a computing device that couples to one or more other devices/circuits, e.g., switching circuits, etc., and which may be configured to communicate with, e.g., to control, such devices/circuits. The controller may include any device that performs logic operations. A controller may include a general processor, a central processing unit, an application specific integrated circuit (ASIC), a digital signal processor, a field programmable gate array (FPGA), a digital circuit, an analog circuit, a microcontroller, any other type of controller, or any combination thereof.

As used herein, the term "charger" refers to a device that provides electrical energy to a rechargeable electrochemical cell, causing it to recharge.

As used herein, the term "terminal" refers to an electrical connection that interconnect analog components and circuitry to other components and wires in a circuit. The electrical connection may include wires, traces on a circuit board, and/or another electrically conductive medium/component.

As used herein, the term "integrated circuit" or "IC" refers to an electronic device including one or more electronic circuits including electronic components formed on a small piece of semiconductor material, which performs the same function as a larger circuit made from discrete components.

As used herein, the term "pins" refers to terminals of an IC that interconnect analog components and circuitry within the IC to other components and wires in a circuit. The pins carry electrical signals in and out of the IC to allow it to function in a system.

As used herein, the term "electrochemical cell" refers to an electrochemical storage device that converts stored chemical energy into electrical energy. An electrochemical cell may be charged by a charging circuit that is controlled by a controller and may provide electrical energy to one or more components.

As used herein, the term "line," unless otherwise indicated, refers to an electrically conductive path including various components, such as wires, cables, pads, traces, vias, junctions, connectors, etc. Such line(s) may be used to transmit electric current, electric signals, and so forth.

As used herein, the term "electrically coupled" refers to direct coupling between components and/or indirect coupling between components via one or more intervening electric components, such that electric current can be passed between the two components. As an example of indirect coupling, two components can be referred to as being electrically coupled, even though they may have an intervening electric component between them which still allows electric current to pass from one component to the other component. Such intervening components may include, but are not limited to, wires, traces on a circuit board, and/or another electrically conductive medium/component.

As used herein, the term "communicably connected" refers to direct coupling between components and/or indirect coupling between components via one or more intervening components. Such components and intervening components may include, but are not limited to, junctions, communication paths, components, circuit elements, circuits, functional blocks, and/or devices. As an example of indirect coupling, a signal conveyed from a first component to a second component may be modified by one or more intervening components by modifying the form, nature, or format of information in a signal, while one or more elements of the information in the signal are nevertheless conveyed in a manner than can be recognized by the second component.

As used herein, the term "signal" includes, but is not limited to, one or more electrical signals, optical signals, electromagnetic signals, analog and/or digital signals, one or more computer instructions, a bit and/or bit stream, or the like.

The present disclosure provides a first device. The first device includes a first terminal configured to be electrically connected to a second device. The first device further includes a second terminal configured to be electrically connected to the second device. The first device further includes an outrush circuit. The outrush circuit includes a resistor electrically disposed in series with the first terminal and the second terminal. The resistor is configured to be electrically connected to the first terminal or the second terminal and a power source. The outrush circuit further includes a switch electrically disposed in parallel with the resistor. The switch is configured to be controlled by an external signal received by the first device from the second device when the first device is communicably connected to the second device and the second device is electrically connected to the first terminal and the second terminal. When the first device receives the external signal, the switch is switched on after a startup time from receiving the external signal, such that the switch bypasses the resistor and replaces the resistor, and electric current from the power source substantially passes through the switch. When the external signal is no longer received by the battery pack, the switch remains switched on for a predetermined hold up time. After this predetermined holdup time, the switch is switched off resulting in the electric current from the power source substantially passing through the resistor. The resistor limits electric current to the second device.

The first device, more specifically, the outrush circuit of the first device may prevent supply of excessive electrical current from the power source to the second device when the first device is electrically connected to the second device but is not communicably connected to the second device. This may prevent undesirable damage to the second device due to the excessive electrical current. Further, after the startup time, the outrush circuit of the first device may allow electric current from the power source to substantially pass through the switch, thereby allowing a greater magnitude of electric current (e.g., a magnitude of electric current required for the second device to operate) to the second device. This magnitude of electric current substantially passing through the switch when the switch is switched on may be several orders greater than the magnitude of the electric current substantially passing through the resistor when the switch is switched off. This is because the electric current from the power source to the second device is not limited by the outrush circuit when the switch is switched on. Specifically, the electric current from the power source to the second device is not limited by the resistor of the outrush circuit when the switch is switched on.

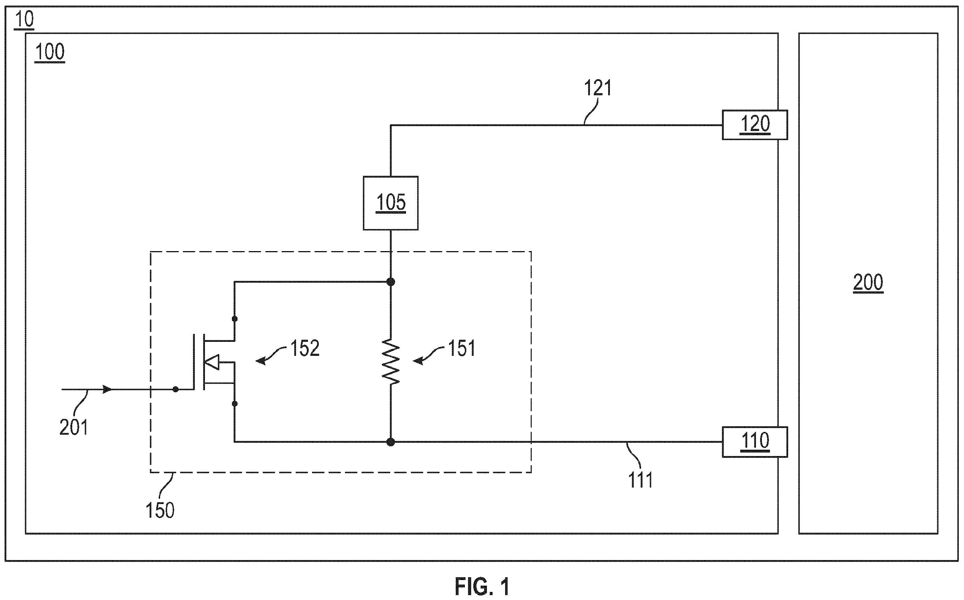

Referring now to the figures, FIG. 1 illustrates a schematic diagram of a system 10 according to an embodiment of the present disclosure.

The system 10 includes a first device 100 and a second device 200. The first device 100 is schematically illustrated by a circuit diagram, and the second device 200 is schematically illustrated by a block in FIG. 1.

The first device 100 may be a battery pack or a device configured to receive electric power from an external power supply and supply the electric power to the second device 200. The second device 200 may be a device configured to operate using the electric power received from the first device 100. Alternatively, the second device 200 may be a charger configured to charge the first device 100. As a result, the second device 200 may be interchangeably referred to as "the external device 200." In some embodiments, the system 10 may be an article of personal protective equipment (PPE). In some embodiments, the second device 200 may be a device of an article of personal protective equipment (PPE) configured to receive the electric power received from the first device 100. Specifically, in some embodiments, the article of PPE may include the external device 200.

The article of PPE may include any article that can be worn by a user for the purpose of preventing or decreasing personal injury or health hazard to the user in or around a hazardous environment. The article of PPE 50 may include safety glasses, safety goggles, face shields, face masks, respirators, gloves, suits, gowns, aprons, hard hats, or any other article that includes a device that utilizes the electrical power for operation.

In some embodiments, the article of PPE may be a respiratory device. For example, the article of PPE may include a self-contained breathing apparatus (SCBA), a powered air purifying respirator (PAPR), and the like. In some embodiments, the external device 200 may be a blower. The external device 200 may be a fan, a blower, or any other device that utilizes electrical power for operation.

The first device 100 includes a first terminal 110 configured to be electrically connected to the second device 200. The first device 100 further includes a second terminal 120 configured to be electrically connected to the second device 200. The second device 200 may include a pair of terminals (not shown) complementary to the first terminal 110 and the second terminal 120, such that the first device 100 and the second device 200 can be electrically connected to each other.

The system 10 may further include a power source 105. The power source 105 may be configured to supply electrical energy to the second device 200. In some embodiments, the power source 105 may be electrically disposed between the first terminal 110 and the second terminal 120.

In some embodiments, the first device 100 may be a battery pack. Therefore, the first device 100 may be interchangeably referred to as "the battery pack 100." Further, the first terminal 110 may be interchangeably referred to as "the first battery terminal 110," the second terminal 120 may be interchangeably referred to as "the second battery terminal 120," and the power source 105 may be interchangeably referred to as "the at least one electrochemical cell 105." Moreover, in such embodiments, the first device 100 may include the power source 105. The power source 105 may be an internal power supply disposed within the first device 100. In some embodiments, the power source 105 may include at least one electrochemical cell. Specifically, the at least one electrochemical cell 105 may be electrically disposed between the first battery terminal 110 and the second battery terminal 120. In some examples, the at least one electrochemical cell 105 may be rechargeable, i.e., the at least one electrochemical cell 105 may be at least one secondary electrochemical cell. In some other examples, the at least one electrochemical cell 105 may not be rechargeable, i.e., the at least one electrochemical cell 105 may be at least one primary electrochemical cell.

In some embodiments, the at least one electrochemical cell 105 may include Lithium-Ion cells, nickel-cadmium (NiCd) cells, nickel metal hydride (NiMH) cells, and the like. In some embodiments, the at least one electrochemical cell 105 may include alkaline cells. In some embodiments, the power source 105 may include a plurality of electrochemical cells electrically connected to each other. In some embodiments, the second device 200 may be a charger configured to charge the at least one electrochemical cell 105 of the first device 100.

In some embodiments, the first device 100 may be a device configured to receive electric power from an external power supply. Therefore, the first device 100 may be configured to be electrically connected to the external power supply. In such embodiments, the power source 105 may be the external power supply. For example, the external power supply may be an external battery, an external electrical source, and the like. The first device 100 may be further configured to supply the electrical power received via the external power supply to the second device 200.

The first device 100 further includes an outrush circuit 150. The outrush circuit 150 is indicated by a dashed rectangle in FIG. 1. As will be discussed in greater detail below, the outrush circuit 150 may selectively limit electric current to the second device 200. Specifically, the outrush circuit 150 may be a current limiting circuit that selectively reduces electric current to the second device 200 in order to reduce or prevent damage to the second device 200 upon electrical connection of the first device 100 to the second device 200.

In some embodiments, the outrush circuit 150 includes a first line 111 electrically connected to the first terminal 110. In some embodiments, the outrush circuit 150 further includes a second line 121 electrically connected to the second terminal 120. In some embodiments, the power source 105 may be electrically connected to the first terminal 110 via the first line 111. In some embodiments, the power source 105 may be electrically connected to the second terminal 120 via the second line 121. Each of the first line 111 and the second line 121 may include an electrically conductive medium, for example, a trace, or a wire. In the illustrated embodiment of FIG. 1, the power source 105 is electrically connected to the second terminal 120 via the second line 121.

The outrush circuit 150 further includes a resistor 151 electrically disposed in series with the first terminal 110 and the second terminal 120. The resistor 151 is configured to be electrically connected to the first terminal 110 or the second terminal 120, and the power source 105. In the illustrated embodiment of FIG. 1, the resistor 151 is electrically connected to the first terminal 110 and the power source 105.

An electrical resistance of the resistor 151 may be selected such that the electrical resistance is small enough to provide an adequate magnitude of electrical current for the second device 200 to start up and begin communication with the first device 100 when the first device 100 and the second device 200 are electrically connected to each other, but large enough for enabling the first device 100 to survive a short circuit test where the first terminal 110 and the second terminal 120 are shorted, for example, during safety testing. Moreover, selection of the electrical resistance of the resistor 151 may depend upon electric power requirements of the second device 200 during its operation. In some embodiments, the resistor 151 may have the electrical resistance between about 1 ohm and about 100 kiloohms. In some cases, the electrical resistance of the resistor 151 may be about 1 kiloohms. In such cases, the resistor 151 may be suitable for the battery pack 100 configured to supply the electrical power to the blower of the respiratory device.

The outrush circuit 150 further includes a switch 152 electrically disposed in parallel with the resistor 151. The switch 152 may include, for example, a transistor, such as a metal oxide silicon field effect transistor (MOSFET). The switch 152 is configured to be controlled by an external signal 201 received by the first device 100 from the second device 200 when the first device 100 is communicably connected to the second device 200 and the second device 200 is electrically connected to the first terminal 110 and the second terminal 120. In other words, upon electrical connection of the first device 100 and the second device 200, and when the first device 100 is communicably connected to the second device 200, the first device 100 may receive the external signal 201 from the second device 200. In some embodiments, the external signal 201 may be generated by the second device 200 when the first device 100 is communicably connected thereto. In some embodiments, the external signal 201 may be generated by the second device 200 when the first device 100 is communicably and electrically connected thereto. The second device 200 may detect electrical connection with the first device 100, and subsequently generate the external signal 201 upon communication with the first device 100.

When the first device 100 receives the external signal 201, the switch 152 is switched on after a startup time from receiving the external signal 201, such that the switch 152 bypasses the resistor 151 and replaces the resistor 151, and electric current from the power source 105 substantially passes through the switch 152. In other words, upon receiving the external signal 201 from the second device 200, the switch 152 may be switched on after the startup time and replace the resistor 151. The startup time may be a time delay between the first device 100 receiving the external signal 201 and switching on of the switch 152. In some embodiments, the startup time may be between about 10 microseconds to about 5 seconds.

When the first device 100 does not receive the external signal 201, the switch 152 is switched off, such that electric current from the power source 105 substantially passes through the resistor 151. The resistor 151 limits electric current to the second device 200.

The outrush circuit 150 of the first device 100 may therefore prevent supply of excessive electrical current from the power source 105 to the second device 200 when the first device 100 is electrically connected to the second device 200 but is not communicably connected to the second device 200. This may prevent undesirable damage to the second device 200 due to the excessive electrical current. Further, after the startup time, the outrush circuit 150 may allow electric current from the power source 105 to pass through the switch 152, thereby allowing a greater magnitude of electric current (e.g., a magnitude of electric current required for the second device 200 to operate) to the second device 200. This magnitude of electric current substantially passing through the switch 152 when the switch 152 is switched on may be several orders greater than the magnitude of the electric current substantially passing through the resistor 151 when the switch 152 is switched off. This is because the electric current from the power source 105 to the second device 200 is not limited by the outrush circuit 150 when the switch 152 is switched on. Specifically, the electric current from the power source 105 to the second device 200 is not limited by the resistor 151 of the outrush circuit 150 when the switch 152 is switched on.

It may be important that the switch 152 remains switched on during operation of the second device 200 in case of a temporary loss of the external signal 201 to the first device 100, such that operation of the second device 200 is not undesirably disrupted. Therefore, in some embodiments, the switch 152 may be switched off after a holdup time. In other words, the switch 152 may remain switched on before the holdup time upon a loss of the external signal 201 from the second device 200. In some embodiments, the holdup time may be between about 10 milliseconds to about 10 seconds. In some embodiments, the holdup time may be greater than about 10 seconds, greater than about 15 seconds, greater than about 20 seconds, greater than about 25 seconds, or greater than about 30 seconds. The holdup time may be varied based on application attributes.

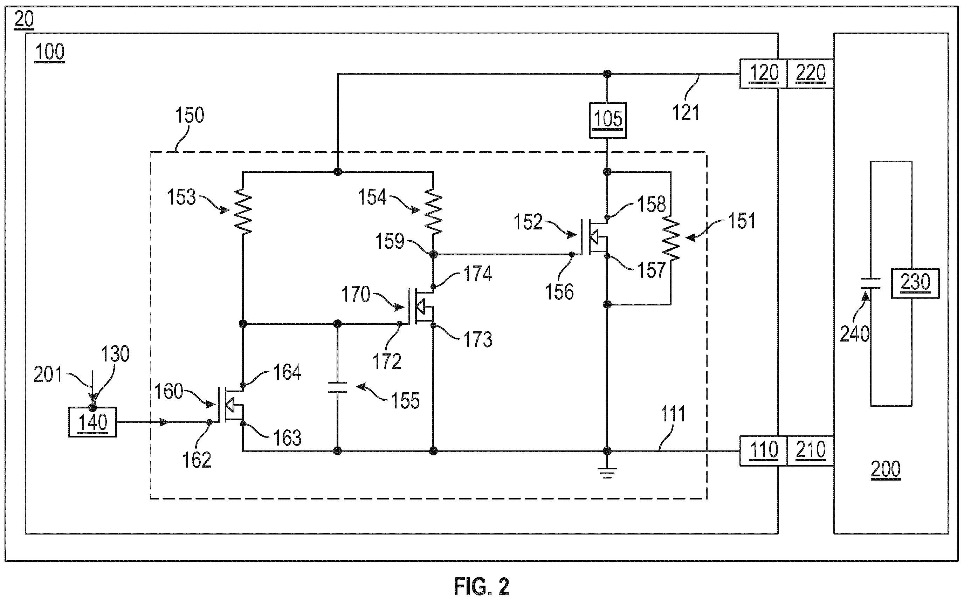

FIG. 2 illustrates a schematic diagram of a system 20 according to another embodiment of the present disclosure. The system 20 is similar to the system 10 of FIG. 1, with like elements designated by like reference characters.

In the illustrated embodiment of FIG. 2, the first device 100 further includes a controller 140 configured to receive the external signal 201 via a communication channel 130. In some embodiments, the communication channel 130 of the controller 140 may be a physical terminal. In some cases, the external signal 201 may be a wireless signal. In such embodiments, the communication channel 130 of the controller 140 may be a wireless communication channel configured to receive the wireless signal (i.e., the external signal 201). Moreover, in the illustrated embodiment of FIG. 2, the external device 200 includes a first terminal 210 and a second terminal 220. The first terminal 210 of the external device 200 may be configured to be connected to the first terminal 110 of the first device 100 and the second terminal 220 of the external device 200 may be configured to be connected to the second terminal 120 of the first device 100. In some embodiments, the first battery terminal 110 may be configured to be electrically connected to the first terminal 210 of the external device 200 and the second battery terminal 120 may be configured to be electrically connected to the second terminal 220 of the external device 200. Therefore, the resistor 151 limits electric power to the first and second terminals 210, 220 of the external device 200 before the startup time and after the holdup time. The external device 200 may further include an electrical load 230 and a capacitor 240 connected in parallel to the electrical load 230.

As discussed above, the outrush circuit 150 includes the first line 111 electrically connected to the first terminal 110 and the second line 121 electrically connected to the second terminal 120.

The outrush circuit 150 may further include a first switch 160. The first switch 160 may include a first control terminal 162 and first and second output terminals 163, 164. The first control terminal 162 may be electrically connected to the controller 140. Specifically, the first control terminal 162 may be electrically and/or communicably connected to the communication channel 130. Further, the first output terminal 163 may be electrically connected to the first line 111.

The outrush circuit 150 may further include a first resistor 153 electrically connected to the second output terminal 164 and the second line 121. In some embodiments, the first resistor 153 may have an electrical resistance between about 1 kiloohms and about 100 megaohms.

The outrush circuit 150 may further include a capacitor 155 electrically connected to the second output terminal 164 and the first output terminal 163 of the first switch 160. In some embodiments, the capacitor 155 may have an electrical capacitance between about 100 picofarads and about 100 microfarads.

The outrush circuit 150 may further include a second switch 170 including a second control terminal 172 and third and fourth output terminals 173, 174. The second control terminal 172 may be electrically connected to the capacitor 155. The third output terminal 173 may be electrically connected to the first line 111.

The outrush circuit 150 may further include a second resistor 154 electrically connected to the fourth output terminal 174 and the second line 121. The second resistor 154 may have an electrical resistance between about 1 kiloohms and about 100 megaohms. Specifically, in some embodiments, each of the first and second resistors 153, 154 may have an electrical resistance between about 1 kiloohms and about 100 megaohms. In some embodiments, each of the first and second resistors 153, 154 may have an equal electrical resistance. However, in some other embodiments, the first and second resistors 153, 154 may have different electrical resistances.

The switch 152 may include a third control terminal 156 and fifth and sixth output terminals 157, 158. The third control terminal 156 may be electrically connected to an intermediate point 159 between the second resistor 154 and the fourth output terminal 174. The resistor 151 may be electrically connected to the fifth and sixth output terminals 157, 158.

When the first device 100 receives the external signal 201, the external signal 201 may be configured to switch on the first switch 160 causing the capacitor 155 to discharge via the first switch 160. Upon discharging, the capacitor 155 may be configured to switch off the second switch 170 causing the switch 152 to switch on. Upon being switched on after the startup time from receiving the external signal 201, the switch 152 may bypass the resistor 151 and replace the resistor 151, such that electric current from the power source 105 substantially passes through the switch 152.

When the first device 100 does not receive the external signal 201, the first switch 160 may be configured to switch off causing the capacitor 155 to charge from the power source 105 via the first resistor 153. Upon charging, the capacitor 155 may be configured to switch on the second switch 170 causing the switch 152 to switch off after the holdup time, such that electric current from the power source 105 substantially passes through the resistor 151. The resistor 151 therefore limits electric current to the second device 200.

In some embodiments, the startup time may be based on the electrical capacitance of the capacitor 155 and an electrical resistance of the first switch 160 when the first switch 160 is switched on. Moreover, the holdup time may be based on the electrical resistance of the first resistor 153, the electrical capacitance of the capacitor 155, and a threshold voltage of the second switch 170.

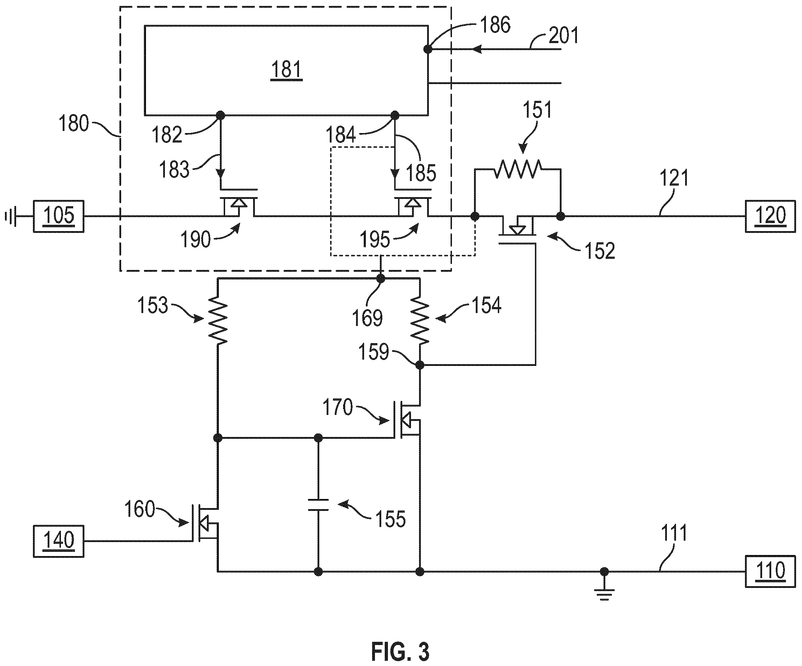

FIG. 3 illustrates a schematic circuit diagram of the first device 100 according to another embodiment of the present disclosure.

In the illustrated embodiment of FIG. 3, the first device 100 further includes a safety circuit 180. The safety circuit 180 may reduce and/or prevent discharging of the power source 105 when the first device 100 does not receive the external signal 201 from the external device 200 (shown in FIG. 2).

In some embodiments, the safety circuit 180 is electrically disposed between the power source 105 and a junction point electrically connected to each of the resistor 151 and the switch 152. In some embodiments, the safety circuit 180 may also be configured to receive the external signal 201. In some embodiments, when the first device 100 does not receive the external signal 201, the safety circuit 180 switches off causing the power source 105 to electrically disconnect from the junction point to prevent discharging of the power source 105.

In some embodiments, the safety circuit 180 may be electrically disposed between the power source 105 and a junction point 169 electrically connected to each of the first and second resistors 153, 154. In such cases, when the first device 100 does not receive the external signal 201, the safety circuit 180 may switch off causing the power source 105 to electrically disconnect from the junction point 169 to prevent discharging of the power source 105.

More specifically, as shown in FIG. 3, the safety circuit 180 may include a fuel gauge integrated circuit (IC) 181. The fuel gauge IC 181 may include a charge control pin 182 configured to provide a charge control signal 183. The fuel gauge IC 181 may further include a discharge control pin 184 configured to provide a discharge control signal 185. The fuel gauge IC 181 may further include a fuel gauge communication pin 186 configured to receive the external signal 201.

The safety circuit 180 may further include a charge transistor 190 electrically disposed between the power source 105 and the junction point 169. The charge transistor 190 may be electrically connected to the charge control pin 182 of the fuel gauge IC 181. The fuel gauge IC 181 may control the charge transistor 190 via the charge control signal 183.

The safety circuit 180 may further include a discharge transistor 195 electrically disposed between the power source 105 and the junction point 169. The discharge transistor 195 may be electrically connected to the discharge control pin 184 of the fuel gauge IC 181. The fuel gauge IC 181 may control the discharge transistor 195 via the discharge control signal 185.

When the fuel gauge IC 181 switches off the discharge transistor 195, the outrush circuit 150 may be no longer powered. This may prevent discharging of the power source 105. Therefore, when the first device 100 is 'asleep' for long periods of time, the fuel gauge IC 181 may switch off the discharge transistor 195, such that the outrush circuit 150 consumes no power. This may prevent discharging of the power source 105 when the first device 100 is not in use.

Unless otherwise indicated, all numbers expressing feature sizes, amounts, and physical properties used in the specification and claims are to be understood as being modified by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

## Claims

1. A first device comprising:
a first terminal configured to be electrically connected to a second device;
a second terminal configured to be electrically connected to the second device; and
an outrush circuit comprising:
a resistor electrically disposed in series with the first terminal and the second terminal and configured to be electrically connected to the first terminal or the second terminal, and a power source; and
a switch electrically disposed in parallel with the resistor, wherein the switch is configured to be controlled by an external signal received by the first device from the second device when the first device is communicably connected to the second device and the second device is electrically connected to the first terminal and the second terminal;
wherein:
when the first device receives the external signal, the switch is switched on after a startup time from receiving the external signal, such that the switch bypasses the resistor and replaces the resistor, and electric current from the power source substantially passes through the switch; and
when the first device does not receive the external signal, the switch is switched off, such that electric current from the power source substantially passes through the resistor, and wherein the resistor limits electric current to the second device.

2. The first device of claim 1, wherein the switch is switched off after a holdup time, and wherein the holdup time is between about 10 milliseconds to about 30 seconds.

3. The first device of claim 1 further comprising the power source electrically disposed between the first terminal and the second terminal, wherein the power source comprises at least one electrochemical cell.

4. The first device of claim 1, wherein the first device is configured to be electrically connected to an external power supply, and wherein the power source is the external power supply.

5. The first device of claim 1, wherein the resistor has an electrical resistance between about 1 ohm and about 100 kiloohms, and
wherein the startup time is between about 10 microseconds to about 5 seconds.

6. The first device of claim 1 further comprising a controller configured to receive the external signal via a communication channel,
wherein the outrush circuit further comprises:
a first line electrically connected to the first terminal;
a second line electrically connected to the second terminal;
a first switch comprising a first control terminal and first and second output terminals, wherein the first control terminal is electrically and/or communicably connected to the communication channel and the first output terminal is electrically connected to the first line;
a first resistor electrically connected to the second output terminal and the second line;
a capacitor electrically connected to the second output terminal and the first output terminal of the first switch;
a second switch comprising a second control terminal and third and fourth output terminals, wherein the second control terminal is electrically connected to the capacitor and the third output terminal is electrically connected to the first line; and
a second resistor electrically connected to the fourth output terminal and the second line;
wherein:
the switch comprises a third control terminal and fifth and sixth output terminals, and the third control terminal is electrically connected to an intermediate point between the second resistor and the fourth output terminal;
the resistor is electrically connected to the fifth and sixth output terminals;
when the first device receives the external signal:
the external signal is configured to switch on the first switch causing the capacitor to discharge via the first switch;
upon discharging, the capacitor is configured to switch off the second switch causing the switch to switch on; and
upon being switched on after the startup time from receiving the external signal, the switch bypasses the resistor and replaces the resistor, such that electric current from the power source substantially passes through the switch; and
when the first device does not receive the external signal:
the first switch is configured to switch off causing the capacitor to charge from the power source via the first resistor; and
upon charging, the capacitor is configured to switch on the second switch causing the switch to switch off after a holdup time, such that electric current from the power source substantially passes through the resistor, and wherein the resistor limits electric current to the second device.

7. The first device of claim 1 further comprising a safety circuit electrically disposed between the power source and a junction point electrically connected to each of the resistor and the switch, wherein the safety circuit is configured to receive the external signal, and wherein, when the first device does not receive the external signal, the safety circuit switches off causing the power source to electrically disconnect from the junction point to prevent discharging of the power source.

8. A battery pack comprising:
a first battery terminal configured to be electrically connected to an external device;
a second battery terminal configured to be electrically connected to the external device;
at least one electrochemical cell electrically disposed between the first battery terminal and the second battery terminal;
an outrush circuit comprising:
a resistor electrically disposed in series with the first battery terminal and the second battery terminal and configured to be electrically connected to the first battery terminal or the second battery terminal, and the at least one electrochemical cell; and
a switch electrically disposed in parallel with the resistor, wherein the switch is configured to be controlled by an external signal received by the battery pack from the external device when the battery pack is communicably connected to the external device and the external device is electrically connected to the first battery terminal and the second battery terminal;
wherein:
when the battery pack receives the external signal, the switch is switched on after a startup time from receiving the external signal, such that the switch bypasses the resistor and replaces the resistor, and electric current from the at least one electrochemical cell substantially passes through the switch; and
when the battery pack does not receive the external signal, the switch is switched off, such that electric current from the at least one electrochemical cell substantially passes through the resistor, and wherein the resistor limits electric current to the external device.

9. The battery pack of claim 8, wherein the switch is switched off after a holdup time, and wherein the holdup time is between about 10 milliseconds to about 30 seconds.

10. The battery pack of claim 8, wherein the resistor has an electrical resistance between about 1 ohm and about 100 kiloohms.

11. The battery pack of claim 8, wherein the startup time is between about 10 microseconds to about 5 seconds.

12. The battery pack of claim 8 further comprising a controller configured to receive the external signal via a communication channel, and wherein the outrush circuit further comprises:
a first line electrically connected to the first battery terminal;
a second line electrically connected to the second battery terminal;
a first switch comprising a first control terminal and first and second output terminals, wherein the first control terminal is electrically and/or communicably connected to the communication channel and the first output terminal is electrically connected to the first line;
a first resistor electrically connected to the second output terminal and the second line;
a capacitor electrically connected to the second output terminal and the first output terminal of the first switch;
a second switch comprising a second control terminal and third and fourth output terminals, wherein the second control terminal is electrically connected to the capacitor and the third output terminal is electrically connected to the first line; and
a second resistor electrically connected to the fourth output terminal and the second line;
wherein:
the switch comprises a third control terminal and fifth and sixth output terminals, and the third control terminal is electrically connected to an intermediate point between the second resistor and the fourth output terminal;
the resistor is electrically connected to the fifth and sixth output terminals;
when the battery pack receives the external signal:
the external signal is configured to switch on the first switch causing the capacitor to discharge via the first switch;
upon discharging, the capacitor is configured to switch off the second switch causing the switch to switch on; and
upon being switched on after the startup time from receiving the external signal, the switch bypasses the resistor and replaces the resistor, such that electric current from the at least one electrochemical cell substantially passes through the switch; and
when the battery pack does not receive the external signal:
the first switch is configured to switch off causing the capacitor to charge from the at least one electrochemical cell via the first resistor; and
upon charging, the capacitor is configured to switch on the second switch causing the switch to switch off after a holdup time, such that electric current from the at least one electrochemical cell substantially passes through the resistor, and wherein the resistor limits electric current to the external device.

13. The battery pack of claim 8 further comprising a safety circuit electrically disposed between the power source and a junction point electrically connected to each of the resistor and the switch, wherein the safety circuit is configured to receive the external signal, and wherein, when the first device does not receive the external signal, the safety circuit switches off causing the power source to electrically disconnect from the junction point to prevent discharging of the power source.

14. An article of PPE comprising:
the external device comprising a first terminal and a second terminal, wherein the first battery terminal is configured to be electrically connected to the first terminal of the external device and the second battery terminal is configured to be electrically connected to the second terminal of the external device, and
the battery pack of claim 8, wherein the resistor limits electric power to the first and second terminals of the external device before the startup time and after a holdup time.

15. The article of PPE of claim 14, wherein the external device is a blower, and wherein the article of PPE is a respiratory device
